# EUROPÄISCHE PATENTSCHRIFT

(11) **EP 3 573 738 B1**
(45) Veröffentlichungstag und Bekanntmachung des Hinweises auf die Patenterteilung: **29.09.2021**
(21) Anmeldenummer: 18705979.5
(22) Anmeldetag: 29.01.2018
(51) Int. Cl.: B01D 46/24, B01D 46/00, B01D 27/08, B01D 29/39

(54) **VORRICHTUNG ZUR ABTRENNUNG VON FESTSTOFFPARTIKELN AUS FLÜSSIGKEITEN UND GASEN**
DEVICE FOR SEPARATING SOLID PARTICLES FROM LIQUIDS AND GASES
DISPOSITIF DESTINÉ À LA SÉPARATION DE PARTICULES SOLIDES À PARTIR DE LIQUIDES ET DE GAZ

(30) Priorität: 30.01.2017 CH 992017
(43) Veröffentlichungstag der Anmeldung: 04.12.2019
(73) Patentinhaber: DrM, Dr. Müller AG, 8708 Männedorf (CH)
(72) Erfinder: WETTER, Kevin, 9053 Teufen (CH); MÜLLER, Patrick, 8706 Meilen (CH)
(74) Vertreter: Tompkin, Christine
(86) Internationale Anmeldenummer: PCT/IB2018/050518
(87) Internationale Veröffentlichungsnummer: WO 2018/138693

(56) Entgegenhaltungen:
- WO-A1-2012/007222
- WO-A1-2013/013327
- CH-A- 339 181
- DE-A1- 2 305 306
- DE-U1- 9 307 195
- US-A1- 2010 264 100

## Beschreibung

Die Erfindung betrifft ein Verfahren zum Betrieb einer Vorrichtung zur Abtrennung von Feststoffpartikeln aus Flüssigkeiten und Gasen, bestehend aus einem Druckbehälter mit hängend angeordneten Filterelementen und einem Einwegbehälter aus flexiblem Kunststoff, in welchem sich eines oder mehrere flache Filterelemente befinden, die durch ein horizontal installiertes Filtratabflussrohr verbunden und fixiert sind und in das zu filtrierende Medium (im Folgenden bezeichnet als Suspension) innerhalb des Einwegbehälters hängen. Es sind zahlreiche Verfahren dieser Art für die Separierung von Feststoffpartikeln und Flüssigkeiten oder Gasen bekannt.

EP 2736619 beschreibt eine Vorrichtung zur Abtrennung von Feststoffpartikeln aus Flüssigkeiten mittels flachen Filterelementen, angeordnet in einem oder mehreren horizontalen Aufhängeregistern, wobei zwischen den einzelnen Filterelementen jeweils ein Distanzhalter angeordnet ist. Diese und ähnliche Apparaturen bestehen meist aus metallischen oder nicht verbrennbaren Materialien und werden häufig in Druckbehältern aus Edelstahl verwendet. Produktberührte Oberflächen müssen hierbei vor dem Einsatz meist einer aufwändigen Reinigung und Sterilisation unterzogen werden.

EP 0555740 zeigt eine Filtervorrichtung, bei der der Drucktank mit einem flexiblen Kunststoff ausgelegt und über einen Dichtungsring am Deckelflansch fixiert wird. Das Filterpaket mit mehreren Filterelementen kann nun eingeführt und der Behälter geschlossen werden. Durch Aufblasen spezieller Quellkörper innerhalb des Filterpakets, kann das Restvolumen minimiert werden. Da die Elemente dieser Vorrichtung nur teilweise durch einen flexiblen Kunststoff von den Filtriermedien geschützt sind, lassen sich Teile der Filtriervorrichtung nur mit hohem Aufwand wiederverwenden. Die Komplexität und die hohe Anzahl an Einzelteilen und Materialien erhöhen die Herstellungskosten und erschweren die Installation der Apparatur.

Ein weiterer Ansatz für eine Einwegvorrichtung zur Abtrennung von Feststoffen aus Flüssigkeiten ist in US 20100264100 beschrieben. Runde, flache Filterelemente aus Kunststoff werden aufgestapelt, von einem flexiblen Kunststoffbehälter umhüllt und in einem Stützbehälter installiert. Durch die kompakte Bauweise ergibt sich eine grosse Filtrationsfläche. Es sind Abdichtungen zwischen allen Filterelementen notwendig. Ein sogenannter "Scale-up" oder eine massstäbliche Vergrösserung der Filtervorrichtung ist in Hinsicht auf das komplexe Design der Filterelemente teuer und nur schwierig realisierbar. Auch eine Rückspülung der Filterelemente ist nur mit Anpassungen möglich. Durch die relativ grosse Dicke der einzelnen Filterelemente ist eine Kompression des Filterpakets und somit die Absaugung des Restvolumens nur teilweise möglich.

DE 3807828 offenbart eine Vorrichtung zur Filtration von Flüssigkeiten innerhalb eines geschlossenen Behälters mit einem mehrteiligen, zusammengeschweissten Deckel aus thermoplastischem Kunststoff und einem Folienschlauch mit darin angeordneten Filterpatronen. Der Deckel und die Filterpatronen sind durch ein Gewinde verbunden. Der Folienschlauch mit den Filterpatronen ist aus dem Behälter zur Entsorgung entnehmbar.

EP 2283907A1 beschreibt ebenfalls eine Vorrichtung zur Filtration von Flüssigkeiten mit einem Filterelement in Form einer Kartusche stabiler Bauweise, welche mit einer Kunststofffolie dichtend umhüllt ist und in einem Druckbehälter betrieben wird. Durch die grundsätzlich grosse Form solcher Filterkartuschen, ist ein relativ grosser Drucktank nötig und die verfügbare Filterfläche im Bezug zum Tankvolumen ist sehr klein. Solche Kartuschen erfordern sehr viel Material zur Herstellung, welches nach Gebrauch zusätzlich auch noch entsorgt werden muss.

WO 2012/007222 offenbart einen Filter für einen Einmalgebrauch mit einer Hülle, die in einem Positionierrahmen platziert ist und in der Filterelemente horizontal angeordnet sind. Die horizontalen Filterelemente sind jeweils durch Distanzhalter fixiert, sodass die Filterelemente sich einander nicht berühren und Filterkuchen an den Filterelementen zunehmend aufgebaut werden und darauf zusammen mit den Filterelementen entfernt werden können.

WO 2013/03327 offenbart einen Filter mit einer Anzahl von Filterelementen, die über ihre Länge mittels Distanzhaltern oder Stegen voneinander distanziert sind. Die Filterelemente sind durch rohrförmige Gitter überzogen.

DE 23 05 306 offenbart einen Filter in einem Gehäuse und eine dichte Befestigung von Enden von Filtertaschen in Öffnungen in einem Zwischenbodens des Filtergehäuses. Hierzu sind offene Enden der Filtertaschen mit einem flexiblen Flanschteil verbunden, der am Zwischenboden angeklemmt ist.

### Beschreibung der Erfindung

Aufgabe der Erfindung ist es, ein Verfahren zum Betrieb einer Vorrichtung zu schaffen, welche die erwähnten Nachteile beseitigt und insbesondere ein vereinfachtes Filtrationssystem als Einwegvariante bietet. Dies hat in all jenen Prozessen einen erheblichen Nutzen, wo grosse Durchflussmengen, minimierte Reinigungskosten und kurze Umrüstzeiten bei einem Produktewechsel sowie ein minimiertes Suspensions-Restvolumen gefordert sind. Beispiele dafür sind die Lebensmittelbranche oder die biopharmazeutische Industrie. Gerade ist es in diesen Industriezweigen von grosser Bedeutung, dass ein Filtrationssystem auch als steriles Einwegsystem angeboten werden kann.

Diese Aufgabe wird durch die im Anspruch 1 definierte Erfindung gelöst. Weitere Ausführungsformen ergeben sich aus den abhängigen Ansprüchen.

Es wird eine Vorrichtung zur Abtrennung von Feststoffpartikeln aus Flüssigkeiten und Gasen mit einem Druckbehälter und mehreren darin hängend angeordneten Filterelementen offenbart, wobei die Filterelemente in einem flexiblen Behälter aus Kunststoff angeordnet sind, der im Innern des Druckbehälters angeordnet und gegenüber diesem dicht abgeschlossen ist. Der flexible Behälter ist zudem aus dem Druckbehälter entnehmbar.

Der flexible Behälter ist aus einem zähelastischem Kunststoff gefertigt und die mehreren Filterelemente sind jeweils flach ausgebildet und hängend parallel nebeneinander angeordnet, sodass eine grosse Gesamt-Filterfläche pro Volumen bereitsteht, was vorteilhaft für den Durchfluss und die Filtereffizienz der Vorrichtung ist. Zudem sind die parallel angeordneten Filterelemente zueinander zusammenpressbar. Hierzu sind sie zu einem Filterpaket einer Vielzahl von Filterelementen miteinander verbunden, wobei zwischen den einzelnen Filterelementen über den Grossteil ihrer vertikalen Längserstreckung jeweils ein vorbestimmter Freiraum besteht. Zudem weisen die Filterelemente jeweils ein gitterförmiges Stützelement aus einem flexiblen, zähelastischen Kunststoff oder porösen, flexiblen Material auf, folgend als Stützgitter bezeichnet, das mit einem übergestülpten, rundum verschlossenen Filtermedium, zum Beispiel einem Gewebe, einer Membrane oder einem Filz bespannt ist. Zudem weisen die Filterelemente Kanäle für das Abführen der durch das Filtermedium filtrierten Suspension auf, auch Filtrat genannt.

Der eigentliche Filtrationsbehälter besteht aus dem Behälter aus einem flexiblen Kunststoff, in dem die mehreren Filterelemente angeordnet sind. Der Filtrationsprozess geschieht vollständig im abgegrenzten, abgedichteten Raum des flexiblen, inneren Behälters, wobei die zu behandelnden Flüssigkeiten und Gase nur jeweils mit dem Kunststoff des inneren, flexiblen Behälters in Berührung kommen. Dies hat bedeutende Vorteile im Umgang mit aggressiven Medien und der Prozess-Sterilität. Der innere, flexible Behälter mit den Filterelementen ist als Ganzes aus dem Druckbehälter entnehmbar, ohne dass die Gase oder die Flüssigkeit mit dem Druckbehälter in Berührung kommen, sodass die Vorrichtung ein Einwegsystem bietet. Dadurch werden ein aufwändiges Reinigen und Sterilisieren der Vorrichtung überflüssig.

Der flexible, innere Behälter mit den Filterelementen, der eigentliche Filtrationsbehälter, besteht vollkommen aus Kunststoff, als solches einem zähelastischen Material, ist kompakt faltbar und lagerfähig und kann nach Gebrauch rezykliert oder vollständig durch Verbrennung entsorgt werden. Der äussere Druckbehälter dient dazu, dem Einwegsystem Stabilität zu bieten und das nötige Druckgefälle für die Vor-, Haupt- und Restvolumenfiltration zu liefern.

Erfindungsgemäss wird ein Verfahren zum Betrieb der eingangs präsentierten Vorrichtung zur Abtrennung von Feststoffpartikeln aus Flüssigkeiten und Gasen offenbart mit den folgenden nacheinander ausgeführten Verfahrensschritten: Befüllung des Filtrationsbehälters durch einen ersten Stutzen mit einer Suspension, wobei der Filtrationsbehälter durch einen zweiten Stutzen entlüftet wird, Schliessung eines Entlüftungsstutzenanschlusses, Filterung der Suspension durch die Filterelemente, wobei die Filtration durch eine Druckdifferenz induziert ist und Abführung des Filtrats durch einen Filtratablaufstutzen in einem Pressrohr, nachfolgende Restvolumenfiltration durch Schliessung eines Einlassanschlusses und Erhöhung des Drucks im Druckbehälter, wobei der flexible Behälter zusammengedrückt wird und zur teilweisen oder kompletten Entleerung führt.

Das Filterpaket, bestehend aus einer Vielzahl von parallel angeordneten flächigen Filterelementen lässt sich aufgrund des Freiraums zwischen den Filterelementen und der zähelastischen Eigenschaften des für den inneren Behälter eingesetzten Kunststoffes zusammenpressen. Die daraus gegebene Flexibilität des Filterpakets bietet dadurch Vorteile bei der Entleerung des Filtrationsbehälters, da dieser in höherem Masse kompaktiert werden kann.

Die Flexibilität und Kompaktheit der zu dieser Erfindung gehörigen flachen Filterelemente verbessern zudem den Restvolumenaustrag und vermindern den Rohmaterialgehalt.

Die Anordnung der Filterelemente in einem Filterpaket ermöglicht ein hohes Verhältnis von Filtrationsfläche pro Volumen innerhalb des Behälters. Dies erlaubt einen hohen Durchfluss bei kleinem Behältervolumen und somit eine hohe Filtrationseffizienz mit kleinen Investitionskosten. Zudem ist das Filterpaket durch eine einfache, modulare Herstellung ausgezeichnet, da die Filterelemente einzeln zu gewünschten Längen vorgefertigt und anwendungsspezifisch in Filterpakete verbunden werden können.

In einer Ausführung der Erfindung sind die Filterelemente an einem horizontal verlaufenden Querverbindungsstück befestigt und dadurch zu einem Filterpaket miteinander verbunden. Das Querverbindungsstück erstreckt sich nur über einen kleinen Teil der vertikalen Längserstreckung der Filterelemente, sodass zwischen den Filterelementen über den Grossteil ihrer Längserstreckung ein Freiraum bestehen kann.

In einer alternativen Ausführung sind die Filterelemente über einen kleinen Teil ihrer vertikalen Längserstreckung in einem Kopfelement aus einem giessbaren Kunststoff oder Klebstoff befestigt, wobei wiederum über den Grossteil ihrer Längserstreckung ein Freiraum besteht.

Die Stützgitter sind aus flexiblem, zähelastischem Kunststoff, zum Beispiel Polyethylen, oder einem flexiblen, porösen Material, wie z.B. einem aufgeschäumten Epoxid- oder Polyurethanharz, hergestellt. Stützgitter dieser Art erhöhen die Zusammenpressbarkeit der einzelnen Filterelemente selbst, sodass nicht nur die Filterelemente als Paket durch Verkleinern der Freiräume zwischen den einzelnen Filterelementen sondern auch die einzelnen Filterelemente selbst zusammenpressbar sind. Dies vermindert weiter den Restvolumenaustrag.

Ein horizontal durch die Filterelemente eingeführtes, perforiertes oder geschlitztes Filtratablaufrohr bietet erhebliche Vorteile in der Stabilität des Filterpakets und kann ausserdem zu einer verbesserten Abführung des Filtrats führen.

Die Filterelemente sind so gestaltet, dass eine massstäbliche Vergrösserung des Filterpakets, ein Scale-up, dank der modularen Bauweise sehr einfach realisierbar ist. Es ist auch möglich, mehrere Filterpakete neben- oder hintereinander innerhalb desselben inneren, flexiblen Behälters anzuordnen.

Die Vorrichtung ist in verschiedenen Varianten realisierbar, wobei sich diese vor allem in der Anordnung der Anschlüsse unterscheiden. Je nach Anwendung ist es von Vorteil, wenn die Ein- und Ausgänge des äusseren Druckbehälters sowie der Filtratablauf im oberen, seitlichen oder im unteren Bereich (in Figuren nicht dargestellt) des Druckbehälters angeordnet werden können. Der Filtrationsbehälter ist so gefertigt, dass dieser sehr benutzerfreundlich im Druckbehälter montiert und nach Gebrauch demontiert werden kann. Der Anschluss für die Druckluftzufuhr am Druckbehälter kann wahlweise oben, seitlich oder unten aber mindestens an einer Position definiert werden, dies bietet Vorteile in der Prozessflexibilität und der Effizienz der Filtration und Entleerung des Behälters.

In einer Variante der Erfindung kann der Behältereingang im Innern des Behälters mit einem Schlauch aus flexiblem Kunststoff versehen werden. Dies optimiert den Füllprozess des Behälters. Als Beispiel kann der Behälter mit oben angebrachtem Eingangsstutzen von unten durch den Schlauch mit der Suspension befüllt werden. Dies hat zusätzlich den Vorteil, dass die Störung des Aufbaus einer Feststoffschicht durch vorhandene Suspensionsströmungen vermindert wird.

Es ist vorteilhaft, dass in einer weiteren Variante der Erfindung in einem Seitenflansch des Druckbehälters ein Pressrohr eingeführt ist, welches zusätzlich als Filtratablauf dient. Die seitliche Pressung der Filterelemente verbessert die Stabilität des Filterpakets und dichtet die Verbindung der Filterelemente ab, falls diese durch Dichtmedien abdichtend verbunden sind.

In Filtrationsprozessen insbesondere in Eindickungen ist es häufig notwendig, die Filterelemente rückzuspülen, damit die an den Filterelementen aufgebaute Schicht von Feststoffpartikeln abgespült werden kann. Die erfindungsgemässe Anordnung der Mehrzahl von flächigen Filterelementen ermöglicht eine verbesserte Rückspülung und Ablösung der Feststoffpartikel von den Filterelementen.

Ein bekanntes Problem bei Filtrationsprozessen ist die Behandlung des Restvolumens im Filtersystem. Die erfindungsgemässe Vorrichtung kann durch das Verwenden des Systems im Druckbehälter das Restvolumen vermindern, indem der flexible Filtrationsbehälter mit einem Aussendruck zusammengedrückt und somit teilweise bis vollständig entleert wird. Vor allem bei sehr teuren Medien kann dies erhebliche Mehrkosten verhindern. Für eine weiter verbesserte Entleerung kann der Filtrationsbehälter zudem mit Gasen (zum Beispiel sterile Luft) durchspült werden.

Die Filtrationsvorrichtung ermöglicht dank der vollständig abgeschlossenen, sterilen Filterelemente, der erhöhten Filterfläche und der daraus resultierenden hohen Filtereffizienz und der vollständigen Filtration mit verminderten Restvolumenanteilen eine kostengünstige Filtrationsvorrichtung mit hohen Durchflussmengen, minimierten Reinigungskosten und kurzen Umrüstzeiten bei einem Produktewechsel.

Die Erfindung wird anhand von Zeichnungen näher beschrieben. Es zeigen:
- Fig. 1: die Vorrichtung mit dem Druckbehälter und dem flexiblen, inneren Filtrationsbehälter in einem Längsschnitt während eines Filtrationsbetriebs,
- Fig. 2: die Vorrichtung mit dem Druckbehälter und dem flexiblen, inneren Filtrationsbehälter in einem Längsschnitt während der Entleerung des Filtrationsbehälters,
- Fig. 3: ein einzelnes Filterelement im Längsschnitt
- Fig. 4: ein einzelnes Filterelement im seitlichen Teilschnitt,
- Fig. 5: ein einzelnes Filterelement und mehrere Filterelemente eines Filterpakets mit entsprechenden Suspensions- und Filtratflussrichtungen im Längsschnitt,
- Fig. 6: eine Variante der Vorrichtung mit seitlicher Befestigung des Filterpakets innerhalb des inneren, flexiblen Behälters,
- Fig. 7: eine Variante der Vorrichtung mit kopfseitiger Befestigung der Filterelemente im Filterpaketkopf innerhalb des inneren, flexiblen Behälters,
- Fig. 8: eine Variante der Vorrichtung mit zentraler Befestigung des Filterpakets innerhalb des inneren, flexiblen Behälters.

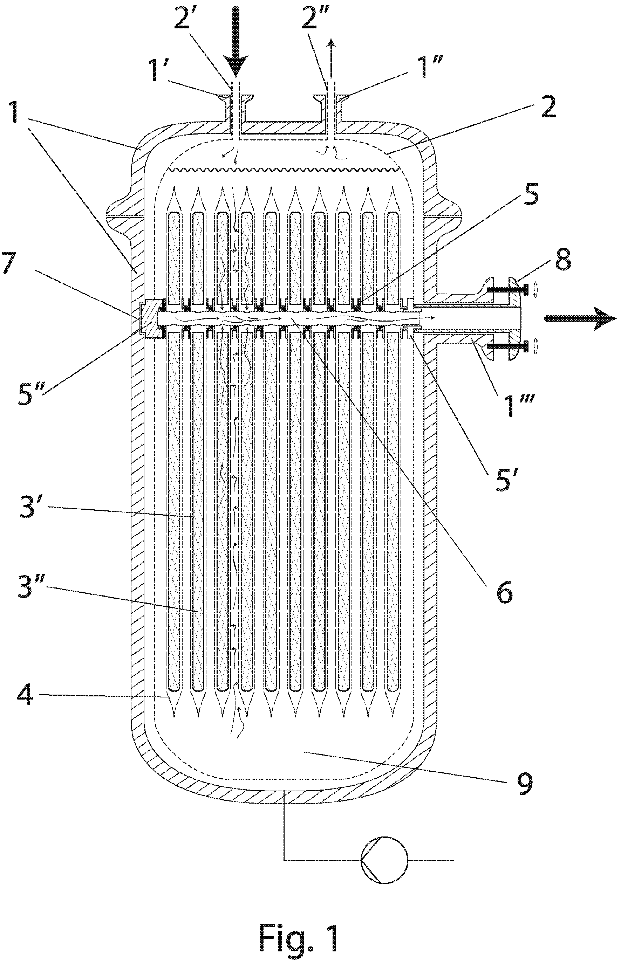

In der Figur 1 wird mit dem Bezugszeichen 1 ein Druckbehälter dargestellt, dessen Behälterwand oben und seitlich mit mindestens einem Einlass-, einem Entlüftungs-und einem Auslassstutzen 1', 1", 1'" bestückt ist und sich mit dem Deckel vorzugsweise von oben öffnen lässt. (Nicht gezeigt sind mögliche Stutzen im unteren Bereich des Druckbehälters.) Ein Behälter 2 aus flexiblem Kunststoff umfasst ein oder mehrere parallel angeordnete, flache Filterelemente und ist innerhalb des Druckbehälters 1 so installiert, dass die Anschlüsse des Behälters 2 (Eingang 2', Entgasungsausgang 2", Pressrohr 8 für Filtratabfluss) passend und dichtend durch die Verbindungsstutzen 1', 1", 1'" geführt und fixiert sind. Die flächigen Filterelemente weisen generell jeweils ein flaches, längliches Stützgitter 3' mit Filtratablaufkanälen 3", ein darauf bespanntes, rundum geschlossenes Filtermedium 4 und mehrere Querverbindungstücke 5 auf, welche mit dem Stützgitter 3' und dem Filtermedium 4 durch eine abdichtende Verschweissung, Verklebung oder Klemmung verbunden sind. Mehrere Filterelemente sind durch eine abdichtende Verschweissung, Verklebung oder Klemmung der Querverbindungstücke 5 zu einem Filterpaket verbunden. Ein solches Paket mit mehreren Filterelementen kann zusätzlich durch ein horizontal eingeführtes, perforiertes Filtratablaufrohr 6 aus Kunststoff stabilisiert werden. Der Behälter 2 umhüllt das Filterpaket und ist auf beiden Seiten an den jeweiligen äusseren Querverbindungstücken 5', 5" dichtend angeschweisst, geklebt oder geklemmt. Das so entstandene abgeschlossene Filterpaket wird durch Anpressung der Querverbindungstücke 5 in eine Einrasterung der Druckbehälterwand 7 positioniert und fixiert. Dies geschieht durch Einschieben eines Pressrohres 8, welches abdichtend durch einen Filtratablaufstutzen 1'" des Druckbehälters 1 eingeführt wird, im Inneren durch eine Pressverbindung zum äusseren Querverbindungstück 5' abdichtet und das Filterpaket so in die Einrasterung 7 des Druckbehälters 1 drückt, dass dieses stabilisiert wird. Falls eine gepresste Klemmverbindung zwischen den Querverbindungstücken 5 und zwischen dem äusseren Querverbindungsstück 5' und dem eingeführten Pressrohr 8 gewählt wird, kann zusätzlich eine Ringdichtung aus Kunststoff oder Elastomeren zur besseren Abdichtung eingefügt werden. Das Pressrohr 8 ist mit Filtratablaufstutzen 1'" versehen und kann mittels Gewinde oder Zustellschrauben in den Behälter 2 geführt, gepresst und fixiert werden.

Nach der Installation wird der flexible Einwegfilter erfindungsgemäss wie folgt betrieben: Der Filtrationsbehälter 2 wird durch einen ersten Stutzen 2' mit der Suspension 9 befüllt, während der Filtrationsbehälter 2 durch einen zweiten Stutzen 2" und der Druckbehälter 1 entlüftet wird. Bei der nachfolgenden durch eine Druckdifferenz induzierte Filtration wird der Entlüftungsstutzenanschluss 1" geschlossen und die Suspension 9 wird durch die Filterelemente gefiltert. Das Filtrat wird im Pressrohr 8 durch den Filtratablaufstutzen 1'" abgeführt. Optional lassen sich die Filterelemente durch Umkehren des Druckgefälles auch wieder Rückspülen. Dies kann insofern nützlich sein, dass sich eine aufgebaute Schicht aus Feststoffpartikeln wieder löst um den Filtrierdurchsatz zu erhöhen.

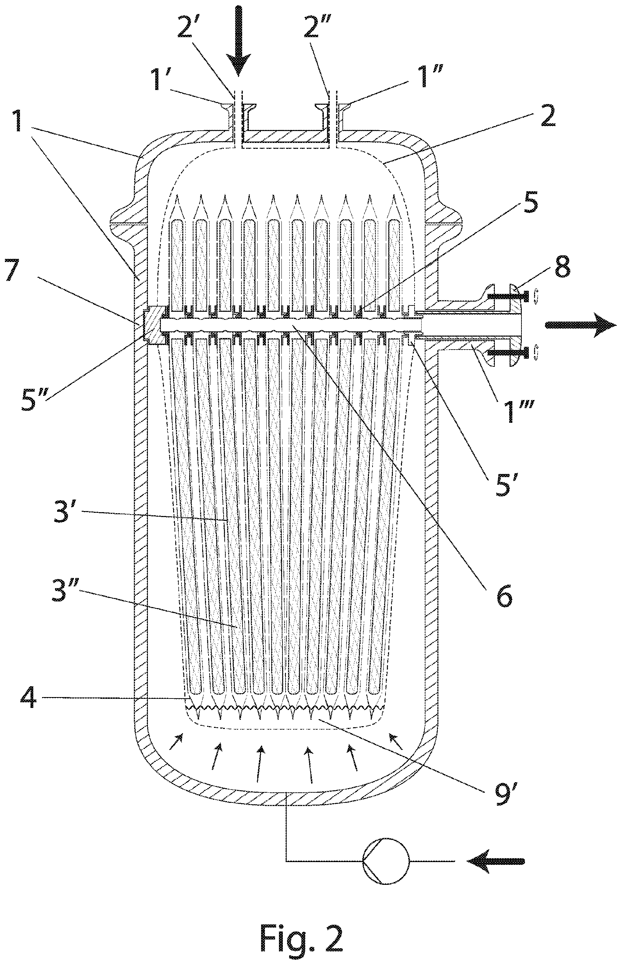

In der Figur 2 wird eine nachfolgende Restvolumenfiltration dargestellt. Für eine Verminderung des Restvolumens der Suspension 9' wird der Einlassanschluss 2' geschlossen und der Druck im Druckbehälter 1 wird erhöht, was zum Zusammendrücken des flexiblen Behälters 2 und zur teilweisen oder kompletten Entleerung führt. Durch die Verwendung von zähelastischem Kunststoff für die flachen Stützgitter 3', kann sich das Filterpaket bei der Restvolumenfiltration zusammendrücken und kompaktieren um das Entleeren zu erleichtern. Zur weiteren Unterstützung der Entleerung kann der Behälter durch den Behältereingang 2' mit Luft oder anderen Gasen durchströmt werden, wobei letzte flüssige Anteile der Suspension und des Filtrats im Behälter 2 und den Filtratablaufkanälen 3" durch das Filtratablaufrohr 6 gespült werden können. In einer weiteren Variante der Restvolumenfiltration mit der Einwegvorrichtung kann das Restvolumen 9' nach erfolgreicher Filtration in entgegengesetzter Richtung durch einen Behältereingang 2' oder den Entlüftungsausgang 2" abgeführt werden. Auch in dieser Variante wird der flexible Behälter 2 durch Anbringen eines Druckes im Druckbehälter 1 zusammengedrückt und kompaktiert.

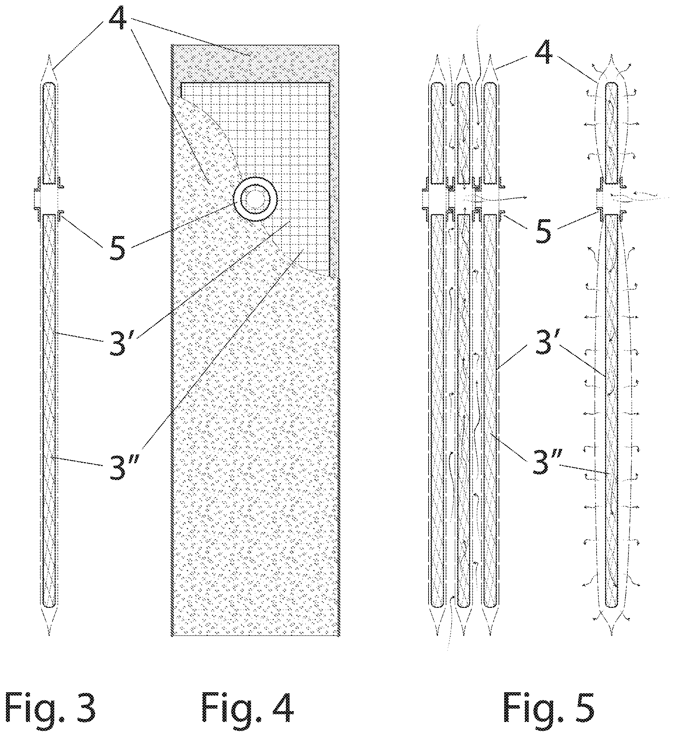

Figuren 3 und 4 zeigen den frontalen und seitlichen Längsschnitt eines Filterelementes. Dieses besteht aus einem Stützgitter 3' aus zähelastischem Kunststoff, bespannt mit dem rundum verschlossenen Filtermedium 4. Das Stützgitter 3' kann aus einem flexiblen Kunststoff oder porösen Material bestehen und zeigt im Innern Filterablaufkänale auf. Ersichtlich sind ausserdem die angeschweissten, angeklebten oder angepressten und mittels eines Dichtungsrings abgedichteten (zum Beispiel durch eine Pressfläche mit Flachdichtung angepresst durch ein Gewinde) Querverbindungstücke 5 aus Kunststoff.

In Figur 5 ist ein Filterpaket bestehend aus mehreren Filterelementen im Längsschnitt ersichtlich. Diese sind zwischen den Querverbindungstücken 5 durch eine abdichtende Verschweissung, Verklebung oder Klemmung verbunden, wobei beim Letzteren zusätzlich eine Ringdichtung zur zusätzlichen Abdichtung eingefügt werden kann. Der Figur 5 sind ausserdem die zu erwartenden Flussrichtungen der Suspension 9 und des Filtrates zu entnehmen, die sich während der Filtration (links) und der Rückspülung (rechts) einstellen. Ein zusätzliches quer eingeführtes, gelochtes oder geschlitztes Filtratablaufrohr kann die Stabilität der Filterelemente im Filterpaket erhöhen. In einer weiteren Variante ist es auch möglich Querverbindungsstücke 5 zu verwenden, welche durch die Filterelemente stützend hindurchgeführt sind. Nach einer Verschweissung, Verklebung oder Klemmung der Querverbindungsstücke 5 bilden diese ein Filtrationsablaufrohr und stabilisieren so das Filterpaket ohne Zugabe eines separaten Filtrationsablaufrohres.

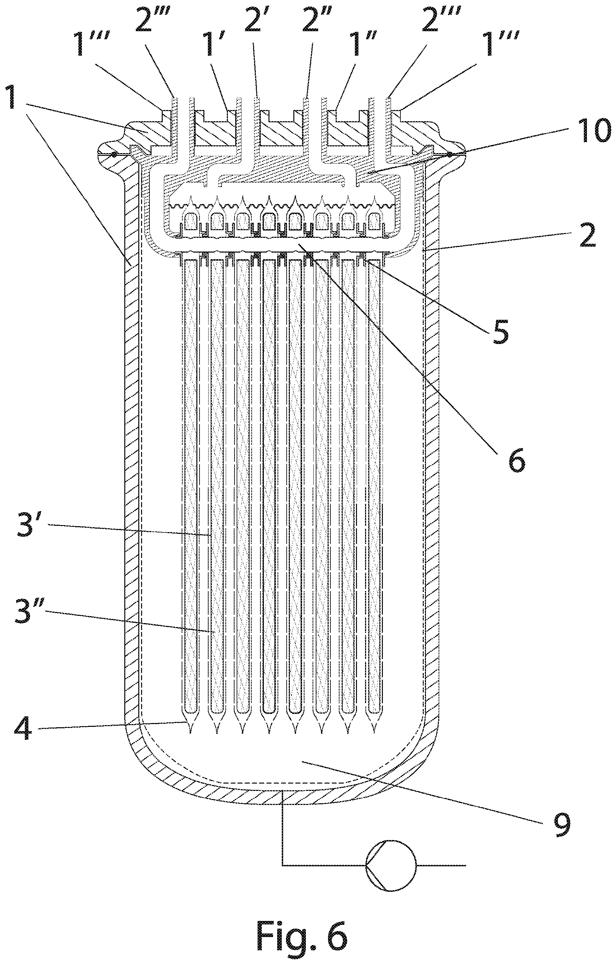

Figuren 6, 7 und 8 zeigen weitere Varianten des als Einwegbehälter verwendbaren Filtrationsbehälters 2 ohne eingeführtes Pressrohr 8. Um die Installation des Behälters 2 im Druckbehälter 1 zu erleichtern sind die Ein- und Ausgänge für die Suspension, Prozessgase 2', 2" und das Filtrat 2'" auf einer Seite am Deckel angebracht (gezeigt ist die Variante mit den Anschlüssen von oben). Die Positionen dieser Ein- und Ausgänge können oben, seitlich oder unten am Behälter 2 realisiert werden. Die Ein-und Auslassstutzen 1', 1", 1"' sind auch am Druckbehälter 1 entsprechend umzusetzen. Zusätzlich ist es möglich (nicht aufgezeigt) den Behältereingang 2' im Innern des Behälters 2 mit einem oder mehreren Schläuchen zu versehen, welcher die eingespeiste Suspension 9 bevorzugt im Behälter 2 verteilt. Zum Beispiel kann ein Behältereingang 2' mit einem Schlauch versehen werden, welcher die Suspension 9 zum unteren Teil des Behälters 2 führt. So kann die Suspension 9 dem Behälter 2 von unten eingeführt werden, auch wenn sich die Behältereingänge 2' an einer anderen Position (hier: oben) befinden. Diese Variante hat den Vorteil, dass der aufbauende Filterkuchen nicht von einer eingeführten Suspension 9 wieder abgespült wird, was die Filtration in gewissen Anwendungen verbessert.

In Figur 6 wird ein Filtrationsbehälter 2 gezeigt, bei welchem das Filterpaket seitlich mit einem massiven Filterpaketkopf 10 aus Kunststoff verbunden ist. Die Verbindung kann durch eine abdichtende Verschweissung, Verklebung oder Klemmung realisiert werden. Der Filterpaketkopf 10 beinhaltet schon alle für die Filtration benötigte Ein-und Ausgänge (Behältereingang 2', Entlüftungsausgang 2", Filtratablauf 2"') und ist mit der flexiblen Behälterwand des Behälters 2 dichtend durch eine Verschweissung, Verklebung oder Klemmung verbunden und umschliesst das gesamte Filterpaket. Vorteilhaft ist, dass mit dieser Variante kein eingeschobenes Pressrohr 8 nötig ist und somit alle Ein- und Ausgänge des Behälters 2 sowie dessen Filtratablauf 2'" auf einer Seite positioniert werden können. Dies vereinfacht die Installation des Behälters 2 im Druckbehälter 1 und verbessert die Stabilität des Filterpakets.

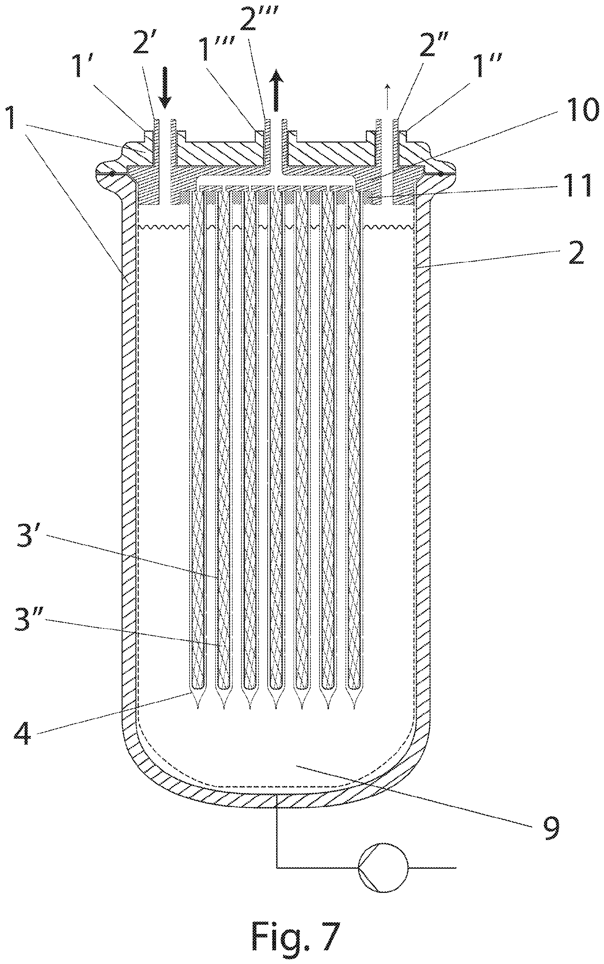

Figur 7 stellt eine Abwandlung der in der Figur 6 gezeigten Variante des Filtrationsbehälters 2 dar, bei dem die einzelnen Filterelemente nicht durch Querverbindungsstücke 5 zu einem Filterpaket verbunden sind, sondern mit Hilfe eines Gusswerkstoffes 11, zum Beispiel eines Schmelzklebstoffs, eines flüssigen Klebstoffsystems oder eines erhitzten, flüssigen Kunststoffs, in einem Kopfelement 10 für das Filterpaket verbunden sind. Diese Anordnung bildet wiederum ein Filterpaket mit vorbestimmtem Freiraum zwischen den Filterelementen, welcher während einer Restvolumenfiltration das Zusammendrücken und Kompaktieren des Filterpakets erlauben.

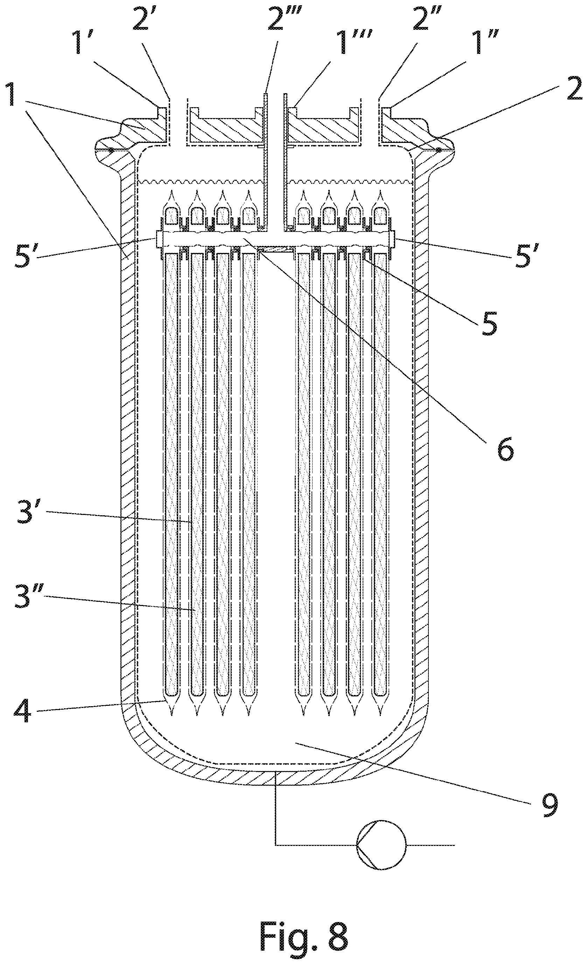

Eine Weiterführung der Erfindung ist in Figur 8 ersichtlich. Der Filtratablauf 2'" wird durch ein Filtratablaufrohr realisiert, welches sich zentral im Filterpaket befindet und mit diesem abdichtend verschweisst, verklebt oder geklemmt ist. Das Filtratablaufrohr 2'" ist auf einer Seite des Behälters 2 (bevorzugt oben oder unten) mit der Behälterwand dichtend verbunden und durch einen entsprechend positionierten Filtratablaufstutzen 1"' am Druckbehälter 1 geführt. Das Filterpaket ist mit dem zentralen Filtratablaufrohr 2'" verbunden und wird von diesem getragen. Die flexible Behälterwand umhüllt das gesamte Filterpaket und kann zusätzlich an den seitlichen äusseren Querverbindungsstücken 5' befestigt werden. Zur zusätzlichen Stabilität kann auch hier ein geschlitztes oder gelochtes Filtratablaufrohr 6 durch die Filterelemente geführt werden. Auch möglich ist das Anbringen von nicht gezeigten Einrasterungen in der Druckbehälterwand 7, auf welcher die äusseren Querverbindungsstücke 5' abgestützt und/oder geklemmt werden können.

## Patentansprüche

1. Verfahren zum Betrieb einer Vorrichtung zur Abtrennung von Feststoffpartikeln aus Flüssigkeiten und Gasen, bestehend aus einem Druckbehälter (1), mit mehreren hängend angeordneten Filterelementen, wobei die Filterelemente in einem flexiblen Behälter (2) aus Kunststoff angeordnet sind, der in dem Druckbehälter (1) angeordnet und gegenüber diesem dicht abgeschlossen ist und der flexible Behälter (2) aus dem Druckbehälter (1) entnehmbar ist, wobei die Filterelemente jeweils flach ausgebildet und parallel nebeneinander angeordnet zu einem Filterpaket miteinander verbunden sind, wobei zwischen den einzelnen Filterelementen über einen Grossteil ihrer vertikalen Längserstreckung ein Freiraum besteht und die Filterelemente zueinander zusammenpressbar sind und die Filterelemente Kanäle (3") für das Abführen der durch das Filtermedium (4) filtrierten Suspension (9) aufweisen,
mit den nacheinander ausgeführten Verfahrensschritten:
Befüllung des Filtrationsbehälters (2) durch einen ersten Stutzen (2') mit einer Suspension (9), wobei der Filtrationsbehälter (2) durch einen zweiten Stutzen (2") entlüftet wird,
Schliessung eines Entlüftungsstutzenanschlusses (1"), Filterung der Suspension (9) durch die Filterelemente, wobei die Filtration durch eine Druckdifferenz induziert ist und
Abführung des Filtrats durch einen Filtratablaufstutzen (1"') in einem Pressrohr (8),
nachfolgende Restvolumenfiltration durch Schliessung eines Einlassanschlusses (2') und Erhöhung des Drucks im Druckbehälter (1), wobei der flexible Behälter (2) zusammengedrückt wird und zur teilweisen oder kompletten Entleerung führt.

2. Verfahren gemäss Anspruch 1,
**dadurch gekennzeichnet, dass**
nach dem Schritt der Abführung des Filtrats durch einen Filtratablaufstutzen (1"') in einem Pressrohr (8),
eine Rückspülung der Filterelemente durch Umkehr des Druckgefälles durchgeführt wird.

3. Verfahren nach Anspruch 1 oder 2
**gekennzeichnet durch**
weitere Entleerung durch Durchströmung des Druckbehälters (1) mit Luft oder anderen Gasen durch einen Behältereingang (2'), wobei flüssige Anteile der Suspension (9') und des Filtrats im flexiblen Behälter (2) und in Filtratablaufkanälen (3") durch ein Filtratablaufrohr (6) gespült werden.

4. Verfahren nach einem der Ansprüche 1-3 **gekennzeichnet durch** Abführung des Restvolumens der Suspension (9') in entgegengesetzter Richtung durch einen Behältereingang (2') oder durch einen Entlüftungsausgang (2"), wobei der flexible Behälter (2) durch Anbringen eines Druckes im Druckbehälter (1) zusammengedrückt und kompaktiert wird.

## Claims

1. Method for operating a device for separating off solids particles from liquids and gases, consisting of a pressure vessel (1), having a plurality of filter elements arranged in a suspended manner, wherein the filter elements are arranged in a flexible container (2) made of plastic, which is arranged in the pressure vessel (1) and is sealingly closed off with respect thereto, and the flexible container (2) can be removed from the pressure vessel (1), wherein the filter elements are each of flat design and are arranged in parallel next to one another and are connected to one another to form a filter pack, wherein a clearance exists between the individual filter elements over a large part of the vertical longitudinal extension thereof and the filter elements can be compressed with respect to one another and the filter elements have channels (3") for discharging the suspension (9) filtered by the filter medium (4),
the method comprising the following method steps carried out one after the other:
filling the filtration container (2) with a suspension (9) through a first nozzle (2'), wherein the filtration container (2) is vented through a second nozzle (2"),
closing a vent nozzle connection (1"), filtering the suspension (9) through the filter elements, wherein the filtration is induced by a pressure difference, and
discharging the filtrate through a filtrate outflow nozzle (1"') in a press-fit pipe (8),
then filtering the residual volume by closing an inlet connection (2') and increasing the pressure in the pressure vessel (1), wherein the flexible container (2) is compressed and leads to partial or complete emptying.

2. Method according to claim 1, **characterized in that**, after the step of discharging the filtrate through a filtrate outflow nozzle (1''') in a press-fit pipe (8), the filter elements are back-flushed by reversing the pressure gradient.

3. Method according to claim 1 or 2, **characterized by** further emptying by passing a flow of air or other gases through the pressure vessel (1) from a container inlet (2'), wherein liquid fractions of the suspension (9') and of the filtrate in the flexible container (2) and in filtrate outflow channels (3") are flushed through a filtrate outflow pipe (6).

4. Method according to any one of claims 1 to 3, **characterized by** discharging the residual volume of the suspension (9') in the opposite direction through a container inlet (2') or through a vent outlet (2"), wherein the flexible container (2) is compressed and compacted by applying a pressure in the pressure vessel (1).

## Revendications

1. Procédé de fonctionnement d'un dispositif de séparation de particules solides contenues dans des liquides et des gaz, comprenant un récipient sous pression (1) comportant plusieurs éléments filtrants disposés de manière suspendue, les éléments filtrants étant disposés dans un récipient souple (2) en matière plastique qui est disposé dans le récipient sous pression (1) et est fermé de manière étanche par rapport à celui-ci, et le récipient souple (2) pouvant être retiré du récipient sous pression (1), les éléments filtrants étant chacun de forme plate et reliés les uns aux autres en étant disposés parallèlement les uns à côté des autres pour former un paquet de filtres, un espace libre existant entre les différents éléments filtrants sur une grande partie de leur étendue longitudinale verticale et les éléments filtrants pouvant être pressés les uns contre les autres, et les éléments filtrants présentant des canaux (3") pour évacuer la suspension (9) filtrée par le milieu filtrant (4), présentant les étapes de procédé suivantes, réalisées l'une après l'autre :
remplissage du récipient de filtration (2) par un premier raccord (2') avec une suspension (9), le récipient de filtration (2) étant ventilé par un deuxième raccord (2"),
fermeture d'un raccord de ventilation (1"), filtrage de la suspension (9) par les éléments filtrants, la filtration étant induite par une différence de pression, et
évacuation du filtrat par un raccord d'évacuation de filtrat (1''') dans un tube de pression (8),
filtration suivante du volume résiduel par fermeture d'un raccord d'entrée (2') et élévation de la pression dans le récipient sous pression (1), le récipient souple (2) étant comprimé et conduisant à une vidange partielle ou complète.

2. Procédé selon la revendication 1,
**caractérisé en ce que**,
après l'étape d'évacuation du filtrat par un raccord d'évacuation de filtrat (1''') dans un tube de pression (8), un rinçage à contre-courant des éléments filtrants est effectué par inversion de la différence de pression.

3. Procédé selon la revendication 1 ou 2,
**caractérisé par**
une vidange supplémentaire par circulation d'air ou d'autres gaz à travers le récipient sous pression (1) par une entrée de récipient (2'), les parties liquides de la suspension (9') et du filtrat dans le récipient souple (2) et dans des canaux de décharge de filtrat (3") étant rincées par un tube d'évacuation de filtrat (6).

4. Procédé selon l'une des revendications 1 à 3,
**caractérisé par**
l'évacuation du volume résiduel de la suspension (9') dans le sens opposé par une entrée de récipient (2') ou par une sortie de ventilation (2"), le récipient souple (2) étant comprimé et compacté par application d'une pression dans le récipient sous pression (1).
